# EUROPÄISCHE PATENTSCHRIFT

(11) **EP 0 636 154 B1**
(45) Veröffentlichungstag und Bekanntmachung des Hinweises auf die Patenterteilung: **05.02.1997**
(21) Anmeldenummer: 93911466.6
(22) Anmeldetag: 15.04.1993
(51) Int. Cl.: C08G 18/38, C08G 18/20, C08G 18/30, C04B 28/26, C09K 17/00

(54) **ORGANOMINERALPRODUKTE, VERFAHREN ZU IHRER HERSTELLUNG UND IHRE VERWENDUNG**
ORGANOMINERAL PRODUCTS, PROCESS FOR PRODUCING THE SAME AND THEIR USE
PRODUITS ORGANOMINERAUX, LEUR PROCEDE DE FABRICATION ET LEUR UTILISATION

(30) Priorität: 16.04.1992 DE 4212830
(43) Veröffentlichungstag der Anmeldung: 01.02.1995
(73) Patentinhaber: F. Willich Berg- und Bautechnik GmbH & Co., D-44379 Dortmund (DE)
(72) Erfinder: BODE, Harald, D-4600 Dortmund 41 (DE)
(74) Vertreter: VOSSIUS & PARTNER
(86) Internationale Anmeldenummer: EP9300909
(87) Internationale Veröffentlichungsnummer: WO9321249

(56) Entgegenhaltungen:
- DE-A- 2 138 403
- DE-A- 3 916 259
- US-A- 4 097 423

## Beschreibung

Die Erfindung betrifft neue hochfeste Organomineralprodukte, die durch Umsetzung von Polyisocyanaten, wäßrigen Alkalisilikatlösungen und Zement erhältlich sind. Diese Produkte zeichnen sich durch eine gegenüber üblichen Polyurethansystemen und Polyisocyanat-Alkalisilikatmassen verkürzte Härtungsdauer bei ihrer Herstellung, größere Härte und Nichtbrennbarkeit aus. Die Erfindung betrifft ferner ein Verfahren zur Herstellung dieser Produkte sowie ein Verfahren zum Verfestigen und Abdichten von Kohle und/oder Gebirgs-, Erd- oder Ziegelformationen, bei dem die Organomineralprodukte aus den genannten Ausgangsstoffen in der zu verfestigenden oder abzudichtenden Formation hergestellt werden.

Organomineralprodukte, die durch Umsetzung von Polyisocyanaten mit wässrigen Alkalisilikatlösungen erhältlich sind, sind in EP-A-167002 beschrieben. Diese Produkte eignen sich als Kitte, Klebstoffe, Isolierstoffe für Wärme oder Kälte und Schallschutz, Beschichtungs- und Abdichtungsmittel, z.B. gegen Wasser. Sie zeichnen sich gegenüber vorher bekannten Produkten insbesondere durch erhöhte mechanische Festigkeit aus.

Zur Herstellung dieser bekannten Organomineralprodukte wird die Umsetzung von Polyisocyanat und Alkalisilikatlösung in Gegenwart einer definierten Menge eines Polyisocyanat-Trimerisierungskatalysators durchgeführt, die derart eingestellt ist, daß ein ineinander verwobener anorganischer und organischer dreidimensionaler Körper entsteht, der verbesserte mechanische Festigkeit aufweist.

In EP-A-167003 ist ein Verfahren zum Verfestigen und Abdichten von Kohle und/oder Gebirgs-, Erd- oder Ziegelformationen im Bergbau, Tunnelbau und in der Bauindustrie beschrieben, das die Durchführung der Umsetzung von Polyisocyanat und Alkalisilikatlösung, die zur Erzeugung der in EP-A-167002 beschriebenen Organomineralprodukte führt, in der zu verfestigenden Kohle oder Gebirgs-, Erd- oder Ziegelformation umfaßt. Das Gemisch der Ausgangsverbindungen wird dabei gewöhnlich über Bohrlöcher oder Injektionslanzen in die zu verfestigende Formation eingebracht, wobei gegebenenfalls Druck angewendet wird. Die Ausgangskomponenten können auch in separaten Behältern von Mehrkammerpatronen untergebracht und nach deren Einbringen in die Formation durch Zerstörung der Patrone miteinander vermischt werden.

Das Verfahren gemäß EP-A-167003 führt infolge der kontrollierten Umsetzung von Polyisocyanat und Alkalisilikatlösung, bei der ein ineinander verwobenes dreidimensionales Netzwerk aus anorganischem Gerüst und organischem Polymerisat entsteht, zu einer im Vergleich zur ungesteuerten Umsetzung der Komponenten erheblich verbesserten Verfestigung der behandelten Kohle oder Gebirgsformation. Jedoch sind die bei der Umsetzung entstehenden Organomineralprodukte infolge ihres organischen Anteils noch nicht völlig unbrennbar, wenngleich ihre Brennbarkeit gegenüber den für den gleichen Zweck eingesetzten Polyurethansystemen erheblich vermindert ist. Auch die zu ihrer Aushärtung erforderliche Zeit ist für manche Anwendungen unerwünscht lang und die Härte der Produkte für manche Zwecke noch nicht ausreichend.

In US-A-4,142,030 ist ein anorganisch-organischer Kunststoff mit verbesserter Festigkeit, Elastizität, Dimensionsstabilität bei Temperaturerhöhung und Flammfestigkeit beschrieben, der sich zur Verwendung zum Ausfüllen von Rissen und Hohlräumen und zur Herstellung von Baustoffen eignet und der hergestellt wird durch Vermischen einer organischen Verbindung mit mindestens zwei reaktiven Wasserstoffatomen und mindestens einer nicht-ionischen hydrophilen Gruppe mit einem wäßrigen Silikat und einem organischen Polyisocyanat und Umsetzung des erhaltenen Gemisches zu einem kolloiden Xerosol. Zur Herstellung dieser Kunststoffe können Katalysatoren eingesetzt werden, die die Umsetzung von Isocyanaten mit reaktiven Wasserstoffatomen katalysieren. Zu diesem Zweck werden tertiäre Amine, Silaamine, stickstoffhaltige Basen und Organometallverbindungen genannt. Verschiedene Hilfs- und Zusatzstoffe können den Kunststoffen einverleibt werden, wie grenzflächenaktive Zusätze, Schaumstabilisatoren, Reaktionsverzögerer, Verstärkungsstoffe, organische und anorganische Füllstoffe oder Verdünnungsmittel verschiedener Art.

In einzelnen Beispielen der US-A-4,142,030 ist auch der Zusatz von Zement bei der Herstellung der Kunststoffe beschrieben. In diesen Beispielen werden drei Komponenten miteinander umgesetzt, wobei die Komponente 1 im wesentlichen das Polyisocyanat, die Komponente 2 das Silikat und die Komponente 3 die organische Verbindung mit reaktiven Wasserstoffatomen enthält. Es wird zunächst ein Gemisch aus den Komponenten 2 und 3 hergestellt, das dann mit der Komponente 1 vermischt wird. Das Gemisch wird mit einem Treibmittel verschäumt. Als Katalysator wird Triethylamin verwendet.

Aus US-A-4,142,030 läßt sich kein besonderer Zweck des Zusatzes von Zement entnehmen, der über den eines Füllstoffes allgemeiner Art hinausgehen würde. Generell wird in dieser Druckschrift gelehrt, daß die erzeugten Verbundmaterialien mit beträchtlichen Mengen an Füllstoffen gefüllt werden können, ohne daß sie ihre wertvollen Eigenschaften verlieren. Für den Fall des Zusatzes von Zement trifft dies ausweislich der Beispiele jedoch nur bedingt zu: Sogar bei geringeren Rohdichten werden ohne Zement höhere Druckfestigkeiten erreicht. Außerdem wird die Abbindungsdauer, d.h. die Zeit zwischen dem Vermischen und der Aushärtung, durch den Zementzusatz beträchtlich erhöht.

Somit ergibt der Zusatz von Zement zu den anorganisch-organischen Verbundmaterialien gemäß US-A-4,142,030 weder eine Verkürzung der Härtungsdauer noch eine Verbesserung der mechanischen Eigenschaften der Produkte, insbesondere der Festigkeitseigenschaften.

In den Beispielen der US-A-4,142,030 wird der Zement zum Teil mit der Isocyanatkomponente und zum Teil mit der Wasserglaskomponente in die Masse eingebracht. Die Vorbereitung einer Komponente, in der Zement und Wasserglas vereinigt sind, bereitet jedoch verfahrenstechnische Schwierigkeiten, da Zement mit dem Wasser des Wasserglases reagiert und schwer gleichmäßig zu dispergieren ist. Eine Verwendung einer Wasserglas/Zementkomponente ist bei Anwendungen, in denen vorbereitete Komponenten über längere Zeit aufbewahrt werden müssen, nicht möglich.

Eine weitere Schwierigkeit in der Herstellung von anorganisch-organischen Kunststoffen ist die Einbringung des Katalysators in die Masse. Üblicherweise wird der Katalysator mit der Wasserglas-Komponente vorgemischt. Die Katalysatoren bleiben im Wasserglas jedoch nicht gleichmäßig dispergiert sondern trennen sich vom Wasserglas und schwimmen auf. Wenn der Katalysator vor dem Zusammenbringen der Komponenten nicht redispergiert wird, ist eine gleichmäßige Katalyse des Gemisches nicht sichergestellt.

Der Erfindung liegt somit die Aufgabe zugrunde, neue Organomineralprodukte auf der Basis von Polyisocyanaten, Alkalimetallsilikatlösungen und Zement bereitzustellen, die eine weiter erhöhte Härte aufweisen, die nicht brennbar sind, deren Härtungsdauer deutlich verkürzt ist und die billig sind. Eine weitere Aufgabe der Erfindung besteht darin, ein Verfahren zum Verfestigen und Abdichten von Kohle und/oder Gebirgs-, Erd- und Ziegelformationen zu schaffen, das weiter verbesserte Ergebnisse hinsichtlich der Verfestigung, der Härte der verfestigten Formation, der Aushärtungsdauer und der Nichtbrennbarkeit ermöglicht.

Diese Aufgaben werden durch den überraschenden Befund gelöst, daß sich bei der Umsetzung von Polyisocyanaten und wäßrigen Alkalisilikatlösungen in Gegenwart von Zement bei Verwendung bestimmter Katalysatoren die Polyurethan-Reaktion und die Abbinde-Reaktion des Zements mit dem vorhandenen Wasser gegenseitig derart beeinflussen, daß eine Verfestigung in sehr kurzer Zeit erfolgt und damit Produkte mit hoher mechanischer Festigkeit erhalten werden, die infolge des hohen Anteils an anorganischer Substanz nicht brennbar sind.

Gegenstand der Erfindung sind somit hochfeste Organomineralprodukte, die durch Umsetzung von Polyisocyanaten, wäßrigen Alkalisilikatlösungen und Zement in Gegenwart eines im Polyisocyanat stabilen Katalysators erhältlich sind.

Gegenstand der Erfindung ist ferner ein Verfahren zum Verfestigen und Abdichten von Kohle und/oder Gebirgs-, Erd- und Ziegelformationen, das die Umsetzung von Polyisocyanaten, wäßrigen Alkalisilikatlösungen und Zement in Gegenwart eines im Polyisocyanat stabilen Katalysators in der zu verfestigenden Kohle oder Gebirgs-, Erd- oder Ziegelformation umfaßt.

In EP-A-167 002 wird beschrieben, daß Polyisocyanate in wäßriger, alkalischer SiO₂-haltiger Lösung zum wesentlichen Teil zur Trimerisierung angeregt werden können. Dabei wird die NCO/Wasserreaktion weitgehend unterdrückt, so daß eine durch die Rezepturgestaltung steuerbare Menge an gasförmigem CO₂ entsteht, welches optimal zur Reaktion mit dem Wasserglas verwendet wird. Während der Reaktion bauen sich gleichzeitig zwei ineinander verwobene Polymergerüste auf.

Im ersten Reaktionsschritt reagiert ein Teil des Polyisocyanates mit dem Wasser zu Polyharnstoff unter Abspaltung von gasförmigem CO₂. Das in situ entstandene CO₂ reagiert augenblicklich mit dem Me₂O-Anteil der Wasserglaslösung zu Me₂CO₃ · xH₂O (Me ist ein Alkalimetall, insbesondere Natrium oder Kalium). Durch Bindung von Me₂O aus der Wasserglaslösung wird der SiO₂-Anteil zur Polykieselsäurebildung angeregt. Bei der Reaktion werden erhebliche Wärmemengen frei.

Wenn gemäß vorliegender Erfindung die Umsetzung von Polyisocyanat und Wasserglas in Gegenwart von Zement sowie in Gegenwart eines im Polyisocyanat stabilen, vorzugsweise in diesem dispergierten Katalysators durchgeführt wird, dann erfolgt nicht ein allmählicher Aufbau des organisch-anorganischen festen Produktes, sondern die Masse erfährt nach dem Zusammenbringen der Komponenten eine sofortige Gelierung: die Verfestigung der Masse setzt schlagartig ein.

Das Reaktionsgemisch aus Isocyanat und Wasserglas ist mehrere Minuten fließfähig und erreicht seine Endfestigkeit erst nach einigen Tagen. Auch eine Masse aus Zement und Wasser oder Wasserglas ist längere Zeit, z.B. mehrere Stunden fließfähig und bindet im Lauf dieser Zeit langsam ab. Dagegen bindet ein Gemisch aus allen drei Komponenten, nämlich Isocyanat, Wasserglas und Zement, in Gegenwart eines geeigneten Katalysators, nach dem Zusammengeben sofort ab und führt zu schlagartigem Erstarren des Produktes. Ohne an eine bestimmte Theorie gebunden zu sein wird angenommen, daß durch die erfindungsgemäß eingesetzten Katalysatoren die NCO/Wasser-Reaktion beschleunigt wird. Die dabei einsetzende Wärmeentwicklung und der Wasserentzug aus dem Wasserglas sowie der zusätzliche Wasserentzug aus dem Wasserglas durch den Zement führen zu einem Ungleichgewicht im Wasserglas mit der Folge einer Ausfällung der Kieselsäure und dem Aufbau von Polykieselsäuren aus dem SiO₂. Gleichzeitig setzt die Hydratisierung des Zements unter Freisetzung weiterer Wärme ein. Das hierbei gebildete Ca(OH)₂ reagiert in einer Nebenreaktion mit den Oligosilikaten des Wasserglases zu polymeren Ca-Silikaten (Puzzolanreaktion). Diese stark exotherm verlaufende Nebenreaktion führt ebenfalls zu einer frühen Verfestigung des Endproduktes. Die exotherm verlaufenden Reaktionen beschleunigen sich gegenseitig.

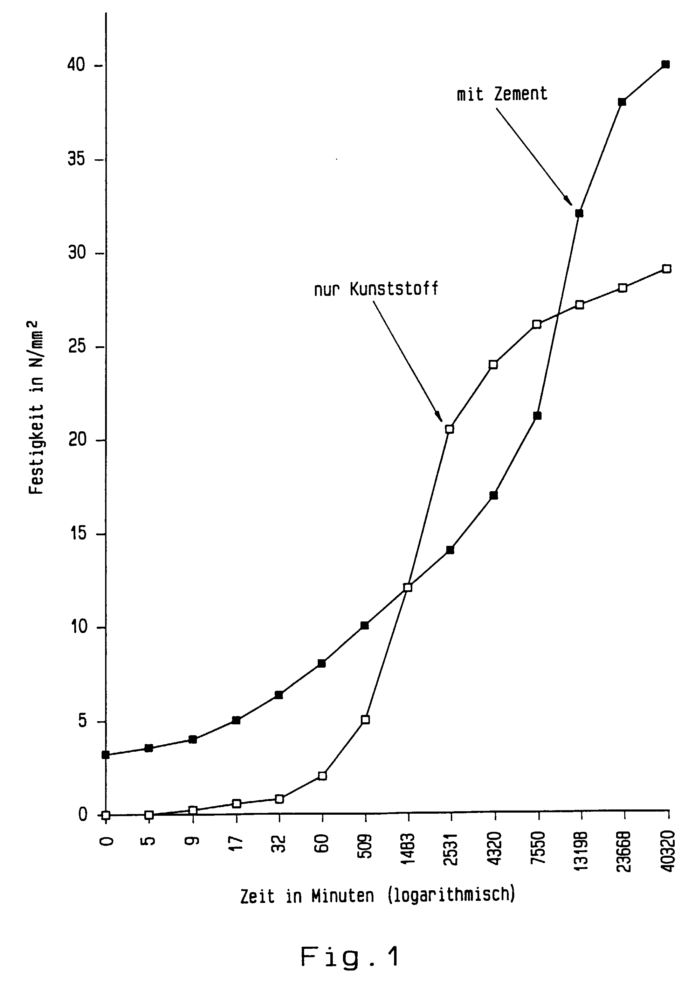

Die sofortige Verfestigung des Reaktionsgemisches der Erfindung führt zu schnell eintretender Frühfestigkeit der Masse und verhindert eine Entmischung unter Austreten einzelner Komponenten. Die Zunahme der Festigkeit der Reaktionsmasse der Erfindung im Vergleich zu derjenigen eines Isocyanat/Wasserglas-Gemisches ohne Zement ist aus Fig. 1 ersichtlich.

Die sofortige Verfestigung ist ein für verschiedene Anwendungen vorteilhafter Effekt. Beispielsweise wird bei der Verfestigung und Abdichtung von Kohle und/oder Gebirgs- und anderen Formationen häufig rasche Aushärtung verlangt, insbesondere wenn Bohrlöcher über Kopf verfüllt werden sollen und dabei die im Berg- und Tunnelbau übliche Patronentechnik angewendet wird, um Anker zu befestigen. Hierbei werden die Bestandteile des Reaktionsgemisches in zwei Vorgemischen in einer umeinanderliegenden Zweikammerpatrone in das Bohrloch gebracht und die Patrone dann zerstört. Es erfolgt sofortiges Erstarren des Gemisches, wodurch der Anker sofort an seinem Platz gehalten wird.

Ein weiterer Vorteil des Systems der Erfindung ist seine geringe Brennbarkeit, die auf den im Vergleich zu Isocyanat/Wasserglas-Gemischen weiter erhöhten anorganischen Anteil zurückzuführen ist.

Bei der Anwendung zur Verfestigung oder zum Abdichten von Kohle-, Gebirgs- oder ähnlichen Formationen, insbesondere im Bergbau und Tunnelbau, ergibt die Erfindung somit ausgeprägte Vorteile gegenüber den bisher eingesetzten Systemen, deren wichtigste Polyurethan-, Polyepoxid- oder Polyesterharze sind. Diese sind leicht entflammbar, besitzen eine lange Aushärtungszeit und geringe mechanische Belastbarkeit. Bei den Umsetzungen zu ihrer Herstellung treten hohe Reaktionstemperaturen auf und in manchen Fällen entstehen toxische Gase.

Insbesondere im Brandfall, der ausgelöst sein kann durch Selbstentzündung der Kohle infolge der hohen Reaktionstemperaturen, entstehen Gase, die die Wirksamkeit der Filterselbstretter der Bergleute stark angreifen.

Es besteht daher ein Bedarf nach einem Kunststoff-Verfestigungsverfahren und einem dafür geeigneten Material, bei dessen Anwendung nur niedrige Reaktionstemperaturen auftreten und das schwer entflammbar ist.

Für eine großflächige Anwendung im Bergbau ist bisher noch kein Kunststoff zugelassen.

Das Material der vorliegenden Erfindung dagegen eignet sich infolge seiner vorstehend erläuterten Eigenschaften sogar zum Anspritzen, das durch seine sofortige Gelierung technisch möglich ist. Gegenstand der Erfindung ist deshalb auch ein Verfestigungs- und Abdichtverfahren, bei dem die Komponenten der Masse der Erfindung in einem an sich bekannten Zweikomponenten-Spritzverfahren (unter Verwendung einer Spritzpistole) auf die abzudichtende Fläche aufgebracht werden.

Die notwendigen Bestandteile des Reaktionsgemisches zur Herstellung der hochfesten Organomineralprodukte der Erfindung sind eine Wasserglaslösung, ein Polyisocyanat, ein Zement und ein im Polyisocyanat stabiler Katalysator.

Zur Herstellung der Organomineralprodukte der Erfindung können die auf dem Fachgebiet üblicherweise benutzten wäßrigen Alkalisilikatlösungen eingesetzt werden, beispielsweise die in der EP-A-579 und in der DE-A-24 60 834 beschriebenen Wasserglaslösungen. Wegen ihrer leichten Zugänglichkeit und geringen Viskosität sind Natriumwassergläser bevorzugt.

Bevorzugt eingesetzt werden Natriumwassergläser mit verhältnismäßig hohem Feststoffgehalt, der günstigerweise im Bereich von 40 bis 60, insbesondere 46 bis 52 Gewichtsprozent anorganische Feststoffe liegt. Theoretisch sind auch höherkonzentrierte Wasserglas lösungen verwendbar und im Sinne der Erfindung einsetzbar. Wegen der allzuhohen Viskosität und der daraus sich ergebenden Verarbeitungsschwierigkeiten haben solche Wasserglaslösungen jedoch keine praktische Bedeutung.

Das Molverhältnis von SiO₂ zu Me₂O in der eingesetzten Wasserglaslösung ist vorzugsweise verhältnismäßig hoch und liegt günstigerweise im Bereich von 2,09 bis 3,44. Besonders bevorzugt ist ein Bereich von 2,48 bis 3,17, insbesondere 2,70 bis 2,95.

Durch einen Me₂O-Gehalt innerhalb des vorstehend angegebenen Bereiches wird der Aufbau des dreidimensionalen anorganischen Kieselsäuregerüstes begünstigt.

In einem Bereich, bei dem der Me₂O-Anteil kleiner als angegeben ist, liegt ein hochviskoses und deshalb verarbeitungstechnisch schwieriges Wasserglas vor. Es genügen schon kleinste Mengen an Reaktions-CO₂ um das Wasserglas zum Ausfällen zu bringen. Vermischungsinhomogenitäten führen dabei zu Produkten mit unzureichenden Eigenschaften.

In einem Bereich, bei dem das Me₂O-Verhältnis den angegebenen Bereich wesentlich überschreitet, wird zur vollständigen Aushärtung des Wasserglasanteils in einer Rezeptur ein hoher Anteil von Reaktions-CO₂ benötigt.

Zusammensetzung und Menge des verwendeten Wasserglases müssen bei der Festlegung der Menge der übrigen Reaktionsteilnehmer und gegebenenfalls der Katalysatormenge berücksichtigt werden, um optimale Festigkeit des Produktes zu erzielen. Organomineralprodukte mit ausgezeichneter Biegezugfestigkeit werden erfindungsgemäß insbesondere dann erhalten, wenn das Polyisocyanat und die Wasserglaslösung in einem Molverhältnis NCO/SiO₂ von 0,8 bis 1,4, vorzugsweise von 0,85 bis 1,15, eingesetzt werden. Besonders bevorzugt ist ein Molverhältnis NCO/SiO₂ von 1,0.

Wie bereits erwähnt, wird die Verwendung konzentrierter Wasserglaslösungen bevorzugt, um einen zu großen Wassergehalt der Produkte zu vermeiden, der ihre Festigkeitseigenschaften nachhaltig negativ beeinflussen würde. Bezogen auf den eingesetzten Zement sollte der Wasseranteil 20 bis 80 % vorzugsweise 40 bis 60 % sein. Dieser wird durch den Wasserzementwert angegeben, der der Quotient aus Masse Wasser und Masse Zement ist. Da die Festigkeits- und Schwundeigenschaften durch zuviel Wasser negativ beeinflußt werden, sollten bei der Formulierung die angegebenen Werte nicht überschritten werden. Der erforderliche Wasseranteil wird hauptsächlich über das Wasserglas eingebracht. Die Untergrenze des Wasserglasanteils ist durch die Tatsache vorgegeben, daß seine Menge zum Aufbau des anorganischen Gerüstes ausreichen muß. Dazu sind mindestens 0,2, vorzugsweise mindestens 0,5 Gewichtsteile Wasserglas pro Gewichtsteil Polyisocyanat erforderlich. Die Obergrenze des zulässigen Wasserglasanteils ist bei gegebener Wasserglaszusammensetzung dann erreicht, wenn die freigesetzte Menge CO₂ nicht mehr ausreicht, den Me₂O-Anteil des Wasserglases zu binden. Genauso wie bei zu hohem Wassergehalt ist dann eine vollständige aushärtung nicht mehr möglich. Bei Verwendung von Natronwasserglas 48/50 mit einem Molverhältnis SiO₂/Me₂O von 2,85 liegt die Obergrenze des Wasserglasgehaltes beispielsweise bei 1,6 bis 1,7 Gewichtsteile Wasserglas pro Gewichtsteil Polyisocyanat. Die angegebenen Grenzwerte können sich bei Wassergläsern mit anderer Zusammensetzung etwas verschieben.

Zur Herstellung der Organomineralprodukte der Erfindung können die üblicherweise auf dem Fachgebiet eingesetzten Polyisocyanate verwendet werden, beispielsweise die in der EP-A-579 und in der DE-A-24 60 834 genannten Verbindungen. Geeignet sind ferner auch NCO-Voraddukte, wie sie von der Herstellung von Polyurethanen bekannt und in der DE-A-24 60 834 beschrieben sind.

Bevorzugt werden zur Herstellung der Organomineralprodukte der Erfindung Polyisocyanate, die leicht eine Trimerisierungsreaktion zum Aufbau eines dreidimensionalen organischen Gerüstes eingehen können. Dies sind Verbindungen, die möglichst keine sterische Hinderung der an der Umsetzung beteiligten NCO-Gruppen aufweisen. Ein spezielles Beispiel für ein solches sterisch nicht gehindertes Polyisocyanat ist 4,4'-Diphenylmethandiisocyanat (auch in Form des Phosgenierungsproduktes von Anilin-Formaldehyd-Kondensaten (MDI)), oder ein Präpolymerisat davon, welches vorzugsweise ein Umsetzungsprodukt von vollem MDI mit glykol-gestartetem Polysiloxan mit einer OH-Zahl von 40 bis 200 darstellt.

Die erfindungsgemäß eingesetzten Polyisocyanate haben vorzugsweise einen Gehalt an NCO-Gruppen von 3 bis 55, besonders bevorzug von 10 bis 55 %, bezogen auf die Masse des Polyisocyanats. Ganz besonders bevorzugt sind Polyisocyanate mit einem NCO-Gruppen-Gehalt von 24 bis 36, insbesondere 28 bis 32 Gewichtsprozent. Ein geringerer Anteil an NCO-Gruppen im Polyisocyanat erschwert den Aufbau eines dreidimensionalen organischen Gerüstes. Andererseits wird bei einem höheren NCO-Gehalt leicht zu viel gasförmiges CO₂ freigesetzt, was zu undefinierten geschäumten Produkten führt.

Die dritte, zur Herstellung der Organomineralprodukte der Erfindung notwendige Komponente ist ein Zement. Bevorzugt wegen ihrer allgemeinen Verfügbarkeit und ihres geringen Preises sind die bekannten Portlandzemente, deren chemische Zusammensetzung beispielsweise aus dem Zement-Taschenbuch des Vereins Deutscher Zementwerke, Bauverlag GmbH, 48 Aufl. 1984, S. 50, Tafel 1.04 entnommen werden kann. Auch andere Zemente, wie die übrigen in der genannten Tafel aufgeführten, können erfindungsgemäß eingesetzt werden. Vorzugsweise werden Zemente mit feiner Korngröße eingesetzt, um die Sedimentation zu verhindern. Darüber hinaus führen Zemente mit größerer Kornverteilung zu einer erheblich verringerten Pozzolanreaktion (Reaktion Ca(OH)₂ mit SiO₄⁴⁻) und somit zu einer verlangsamten Verfestigung.

Besonders bevorzugt ist erfindungsgemäß der Einsatz eines Zementes, der mit der Isocyanatkomponente nicht reagiert und somit mit dieser vorgemischt werden kann. Wegen der erwähnten verfahrenstechnischen Schwierigkeiten ist es nicht bevorzugt, den Zement zusammen mit der Wasserglaskomponente einzusetzen. Dies gilt vor allem bei Anwendungen, bei denen vorbereitete Komponenten zum Einsatz kommen, z.B. bei der Zweikammerpatrone zur Verwendung im Bergbau. Durch die stabile und gleichmäßige Dispergierung solcher Zemente im Isocyanat werden die besten Ergebnisse bezüglich Aushärungszeit und Festigkeit des Produkts erzielt. Der Fachmann kann leicht durch einfache Versuche bestimmen, ob ein Zement mit Isocyanat reagiert oder nicht und damit dem vorstehend genannten Kriterium genügt (Stehenlassen eines Gemisches aus Isocyanat und Zement und Prüfung nach beispielsweise 48 Std.).

Schließlich ist zur Herstellung der Organomineralprodukte ein Katalysator erforderlich, der im Isocyanat stabil ist. Geeignete Beispiele hierfür sind heterozyklisch substituierte Ether der Formel

B - A - O - A - B

in der A einen Alkylenrest mit 1 bis 4 Kohlenstoffatomen und B einen 5- bis 8-gliedrigen, N und/oder O und/oder S enthaltenden, mono- oder bicyclischen heterozyklischen Ring, insbesondere die Morpholinogruppe bedeutet.

Der derzeit am stärksten bevorzugte Katalysator ist der 2,2-Dimorpholinodiethylether der Formel 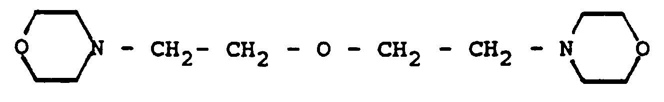 Betont werden muß, daß ein Katalysator der vorstehend genannten Art verwendet werden muß. Er wird zwar vorzugsweise in der Isocyanatkomponente dispergiert eingesetzt, da dies verfahrenstechnische Vorteile bietet (stabile, lagerfähige Dispersion). Dies bedeutet aber nicht, daß das Einbringen dieses Katalysators in die Masse zusammen mit der Wasserglaskomponente nicht vom Gegenstand der Erfindung umfaßt werden sollte. Auch diese Verfahrensweise ist möglich; allerdings muß dann der Katalysator in der Wasserglaskomponente kurz vor dem Zusammenbringen mit den übrigen Komponenten sorgfältig redispergiert werden.

Neben dem genannten für die Zwecke der Erfindung notwendigen, im Isocyanat stabilen Katalysator können zur Beschleunigung der Umsetzung zusätzlich die aus der Polyurethanchemie bekannten Katalysatoren mitverwendet werden.

Beispiele für solche geeignetem Katalysatoren sind:
Tertiäre Amine, wie Triäthylamin, Tributylamin, N-Methylmorpholin, N-Äthylmorpholin, N-Kokomorpholin, N,N,N',N'-Tetramethyläthylendiamin, 1,4-Diazabicyclo(2,2,2)octan, N-MethylN'-dimethylaminoäthylpiperazin, N,N-Dimethylbenzylamin, Bis-(N,N-diäthylaminoäthyl)-adipat, N,N-Diäthylbenzylamin, Pentamethyldiäthylentriamin, N,N-Dimethylcyclohexylamin, N,N,N',N'-Tetramethyl-1,3-butandiamin, N,N-Dimethyl-ß-phenyläthylamin, 1,2-Dimethylimidazol, 2-Methylimidazol und Hexahydrotriazin-Derivate;
Silaamine mit Kohlenstoff-Silicium-Bindungen, wie sie z.B. in der DE-PS 12 29 290 beschrieben sind, z.B. 2,2,4-Trimethyl-2-silamorpholin und 1,3-Diäthylaminomethyl-tetramethyldisiloxan;
stickstoffhaltige Basen, wie Tetraalkylammoniumhydroxide, Alkalimetallhydroxide, wie Natriumhydroxid, Alkalimetallphenolate, wie Natriumphenolat oder Alkalimetallalkoholate, wie Natriummethylat;
organische Metallverbindungen, insbesondere organische Zinnverbindungen, vorzugsweise Zinn(II)-salze von Carbonsäuren, wie Zinn(II)-acetat, Zinn(II)-octoat, zinn(II)-äthylhexoat und Zinn(II)-laurat und die Dialkylzinnsalze von Carbonsäuren, wie Dibutylzinndiacetat, Dibutylzinndilaurat, Dibutylzinnmaleat oder Dioctylzinndiacetat;
ε-Caprolactam, Azanorbornane der Formel 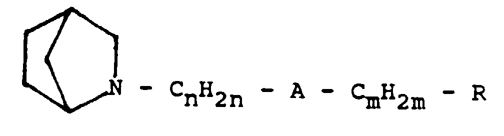 wobei A = O oder CH₂, R = H oder OH, m und n ganze Zahlen sind, die gleich oder verschieden sein können;
Katalysatoren, die die Additionsreaktionen und/oder die Polymerisation bzw. Trimerisation von Isocyanaten katalysieren, wie 2,4,6-Tris-(dimethylaminomethyl)-phenol.

Organomineralprodukte mit besonders günstigen physikalischen Eigenschaften werden erfindungsgemäß dann erhalten, wenn Polyisocyanat und Wasserglas in derartiger Menge und Zusammensetzung eingesetzt werden, daß sich das erläuterte bevorzugte Verhältnis von Katalysatormenge zu NCO-Gruppen zusammen mit dem ebenfalls erläuterten bevorzugten Verhältnis NCO/SiO₂ einstellt und außerdem der Katalysator in derartiger Menge vorliegt, daß die entwickelte CO₂-Menge gerade zur vollständigen Ausfällung des Me₂O-Anteils des Wasserglases ausreicht. Diese Bedingungen sind bei Organomineralprodukten erfüllt, zu deren Herstellung Isocyanat und Wasserglas in derartigen Mengen eingesetzt werden, daß das Verhältnis NCO/Na₂O 0,5 bis 6,5, vorzugsweise 1 bis 3 beträgt, der Zement in derartiger Menge eingesetzt wird, daß zur Umsetzung 0,05 bis 3 Gew.-Teile Zement pro Gew.-Teil Polyisocyanat vorliegen, vorzugsweise das Verhältnis Isocyanat zu Zement 10/1 bis 0,5/1, vorzugsweise 3/1 bis 1/1 beträgt, der Katalysator in derartiger Menge eingesetzt wird, daß das Verhältnis Mol NCO/ mMol Katalysator 1/1 bis 1/36, vorzugsweise 1/5 bis 1/15 beträgt und ein Wasserglas mit üblicher bevorzugter Zusammensetzung, d.h. einem Molverhältnis SiO₂/Me₂O von 2,09 bis 3,44, vorzugsweise 2,48 bis 3,17 benutzt wird.

Zur Herstellung hochwertiger Organomineralprodukte ist bei der Umsetzung von Polyisocyanat und Wasserglaslösung die gleichmäßige Verteilung des Katalysators im Reaktionsgemisch wünschenswert. Der Katalysator wird im Stand der Technik üblicherweise der Wasserglaslösung zugesetzt, wobei jedoch in der bekannten Praxis keine beständige Dispersion erreicht werden konnte, da sich das Gemisch beim Stehen enthomogenisiert. Erfindungsgemäß wird der Katalysator deshalb bevorzugt dem Isocyanat zugesetzt, wozu sich die vorstehend genannten heterocyclisch substituierten Ether besonders eignen.

Zur Herstellung der bevorzugten, nicht expandierten Organomineralprodukte der Erfindung ist der Zusatz eines Treibmittels zum Reaktionsgemisch grundsätzlich nicht erforderlich. Je nach der genauen Rezepturgestaltung und den übrigen Bedingungen der Reaktion kann jedoch dem Gemisch eine genau dosierte, geringe Menge an Treibmittel zugesetzt werden, die jedoch nicht ausreichend ist, um eine Expandierung des Produktes bei der Polymerisation zu bewirken.

Dazu eignen sich flüchtige Substanzen, die bei Raumtemperatur flüssig sind und während der Umsetzung des Wasserglases mit dem Polyisocyanat infolge der dabei freiwerdenden Wärme verdampfen. Beispiele für geeignete flüchtige Substanzen sind Alkane und Halogenalkane.

Die zugesetzte Menge an flüchtiger Sustanz beträgt vorzugsweise höchstens 3,5 Gewichtsprozent, bezogen auf die Gesamtmasse des Reaktionsgemisches. Besonders bevorzugt ist ein Gehalt des Reaktionsgemisches an flüchtiger Substanz von 1 bis 2,8 Gewichtsprozent. Ein derart geringer Zusatz bewirkt keine Expandierung (Aufschäumen) des Produktes während der Umsetzung. Vielmehr entweicht die flüchtige Substanz praktisch vollständig in der Anfangsphase der Umsetzung aus dem Reaktionsgemisch und hinterläßt dabei einzelne Hohlräume und Kanäle, die die im Reaktionsgemisch verbleibende Alkalicarbonatlösung aufnehmen können. Dieser Mechanismus trägt mit zu der außerordentlichen mechanischen Festigkeit der entstehenden Produkte bei.

Dem Reaktionsgemisch können ferner keimbildende und stabilisierende Stoffe zugesetzt werden. Geeignete keimbildende Stoffe sind beispielsweise feinzerteilte Feststoffe, wie Siliciumdioxid oder Aluminiumdioxid, gegebenenfalls zusammen mit Zinkstearat, oder amorphe Kieselsäuren oder Metallsilikate. Davon wird als Keimbildner das aus der kolloidalen Wasserglaslösung ausfallende Siliciumdioxid bevorzugt.

Geeignete Stabilisatoren sind Silikonöle auf der Basis von Polysiloxanen. Sie können in einer Menge von 0,5 bis 2, insbesondere 0,8 bis 1,4 Gewichtsprozent, bezogen auf die Gesamtmasse des Reaktionsgemisches, zugesetzt werden.

Je nach den gewünschten Eigenschaften der Organomineralprodukte können dem Reaktionsgemisch noch weitere Zusätze einverleibt werden. Hierzu gehören beispielsweise organische Verbindungen, die gegenüber Isocyanatgruppen reaktionsfähige Reste aufweisen. Beispiele dafür sind Polyole, wie Polyester- und Polyetherpolyole sowie Phosphonatester z.B. Tri-β-chlor-ethyl- oder -isopropyl-phosphonat, die in der Polyurethan-Chemie bekannt sind. Die Polyole sollen in ihrer Menge derart begrenzt sein, daß ihr Zusatz den Aufbau eines dreidimensionalen organischen und eines damit verwobenen anorganischen Gerüstes nicht stört. Zweckmäßigerweise wird der Zusatz an Polyol oder Phosphonatester deshalb auf höchstens 2 bis 45, vorzugsweise 10 bis 20 Gewichtsprozent, bezogen auf die Isocyanatkomponente, begrenzt. Vorzugsweise enthalten die Produkte keine derartigen organischen Verbindungen.

Zur zusätzlichen Verminderung der Entflammbarkeit der Organomineralprodukte der Erfindung können dem Reaktionsgemisch flammhemmende Stoffe zugesetzt werden. Hierfür eignen sich die in der Kunststoffchemie bekannten flammhemmenden oder flammverzögernden Stoffe, wie Phosphate und Borate. Die Menge an flammhemmenden Stoffen kann im Bereich von 2 bis 30 Gewichtsprozent, bezogen auf die Isocyanatkomponente, liegen. Dem Reaktionsgemisch können ferner Zuschlags- und Füllstoffe zugesetzt werden, die eine weitere Verstärkung des Produktes bewirken. Beispiele für geeignete Füllstoffe sind Diatomeenerde, Aluminiumoxidhydrat, Magnesiumsilikat, Asbestpulver, Kreide, Asbestfasern und Glasfasern. Die Menge der zugesetzten Füllstoffe richtet sich in erster Linie nach der Viskosität des Gemisches. Sie liegt vorzugsweise im Bereich von 0,1 bis 30 Gewichtsprozent, bezogen auf das Gewicht der eingesetzten Wasserglaslösung.

Nach Wunsch können dem Reaktionsgemisch auch Pigmente oder Farbstoffe einverleibt werden.

Zur Herstellung der Organomineralprodukte der Erfindung werden vorzugsweise zunächst zwei Komponenten A und B hergestellt. Die Komponente (A) besteht aus der Wasserglaslösung und gegebenenfalls dem Katalysator, einem Polyol, den flammhindernden Zusätzen, Füllstoffen und Farbstoffen. Die Komponente (B) besteht aus dem Polyisocyanat und dem Zement und enthält den Katalysator, sowie gegebenenfalls die flüchtige Substanz und den Stabilisator. Auch diese Komponente kann mit den genannten Bestandteilen verträgliche Zuschlags- und Füllstoffe sowie die genannten Zusätze enthalten.

Zur Herstellung der Organomineralprodukte werden die Komponenten A und B sorgfältig vermischt. Wenn der Katalysator in der Komponente B enthalten ist, setzt sofortige Gelierung ein. Ist er dagegen in der Komponente A enthalten, dann ist die Startzeit der erhaltenen Gemische nach Wunsch steuerbar. Gegebenenfalls können die Komponenten oder das Gemisch erwärmt oder gekühlt werden, um die Startzeit den Erfordernissen anzupassen.

Die Umsetzung des Gemisches beginnt mit der Reaktion von NCO-Gruppen mit dem Wasser der Wasserglaslösung. Dabei entsteht Polyharnstoff und gasförmiges CO₂. Diese Umsetzung verläuft exotherm und die freiwerdende Wärme führt einerseits zur Verflüchtigung der gegebenenfalls vorhandenen flüchtigen Substanz und, bedingt durch das nun auftretende Ungleichgewicht im Wasserglas, andererseits zur Umsetzung des Zements mit dem Wasser aus dem Wasserglas. Die Wärmemenge, welche bei der Polyharnstoffbildung frei wird, und die Hydratisationswärme aus der Wasserzementhärtung "schaukeln" die Reaktionen gegenseitig hoch, so daß die Verfestigung beschleunigt wird und aufgrund der hohen Temperaturen spannungsfreie Produkte erhalten werden. Das freigesetzte CO₂ seinerseits setzt sich mit dem Me₂O des Wasserglases zu Alkalimetallcarbonat um. Dabei wird dem Wasserglas die Me₂O-Komponente entzogen und die verbleibende Kieselsäure-Komponente bildet im Verlauf der Umsetzung ein dreidimensionales anorganisches Gerüst, das sich mit dem gleichzeitig entstehenden organischen Polymerisat zu einem "interpermeated network" großer Festigkeit verbindet. Die in den von der entweichenden flüchtigen Substanz hinterlassenen "Kanälen" zurückbleibende Alkalicarbonatlösung trägt zur Erhöhung der Festigkeit bei.

Die Organomineralprodukte der Erfindung eignen sich aufgrund ihrer hervorragenden mechanischen und physikalischen Eigenschaften, insbesondere der hohen Festigkeit und der Wasserunempfindlichkeit des Herstellungsverfahrens für einen breiten Bereich von Anwendungsgebieten, z.B. als Bau-, Beschichtungs-, Abdichtungs- und Isoliermaterial sowie auch als Kitt oder Klebstoff. Das Material kann durch Tauchen, Injizieren, Spritzen, Aufrollen oder Aufstreichen eingesetzt werden.

Ein besonderer Verwendungszweck der Organomineralprodukte der Erfindung ist die Verfestigung und Abdichtung im Berg- und Tunnelbau. Wegen seiner sofortigen Gelierung und raschen Verfestigung eignet sich das Material, das zur Erzeugung der Organomineralprodukte dient, insbesondere zur Verwendung in den üblichen Zweikammerpatronen, mit deren Hilfe Anker im Berg befestigt werden. Die Erfindung betrifft deshalb insbesondere auch ein Verfahren zum Verfestigen und Abdichten von Kohle-, Gesteins- und ähnlichen Formationen im Berg- und Tunnelbau, bei dem die Umsetzung der Bestandteile des erfindungsgemäßen Systems in der Kohle oder dem Gestein erfolgt, insbesondere unter Anwendung von Zweikammerpatronen. Gegenstand der Erfindung ist ferner die Verwendung von Zusammensetzungen aus Isocyanaten, Wasserglas, Zement und gegebenenfalls den vorstehend erläuterten Katalysatoren zur Verfestigung und zum Abdichten von losen Kohle- oder Gesteinsformationen im Berg- oder Tunnelbau, insbesondere unter Anwendung der Zweikammerpatronen-Technologie zur sofortigen Befestigung von Ankerstangen.

Die Beispiele erläutern die Erfindung.

### Beispiel 1

Es wird eine Reaktionskomponente A hergestellt, die folgende Stoffe in den angegebenen Mengen enthält:

| Bestandteil | Gew.-Teile |
|---|---|
| Natronwasserglas 48/50 | 225 |
| Al(OH)₃ | 38 |

Getrennt davon wird eine Reaktionskomponente B aus folgenden Bestandteilen hergestellt:

| Bestandteil | Gew.-Teile |
|---|---|
| Polyisocyanat (Roh-MDI = Phosgenierungs- produkt von Anilin-Formaldehyd-Kondensaten) mit einem NCO-Anteil von etwa 31 Gew.-% | 150 |
| Portlandzement PZ 55 | 125 |
| Katalysator (2,2-Dimorpholinodiethylether | 1 |

Unmittelbar beim Vermischen der Komponenten A und B entsteht ein fester Körper, der nach 1 Stunde eine Druckfestigkeit von 10,6 Nmm besitzt.

### Beispiel 2

Beispiel 1 wird mit der Änderung wiederholt, daß in der Reaktionskomponente A zusätzlich 1 Gew.-Teil 2,4,6-Tris-(dimethylaminomethyl)-phenol als Katalysator eingesetzt wird. Die beim Vermischen der Reaktionskomponenten erhaltene Masse hat eine Fließzeit von etwa 5 Sekunden.

### Beispiel 3

Beispiel 1 wird mit der Änderung wiederholt, daß in der Reaktionskomponente A zusätzlich 1 g einer 30%-igen Lösung von Triethylendiamin in Diethylenglykol als zusätzlicher Katalysator verwendet wird. Die beim Vermischen der beiden Reaktionskomponenten erhaltene Masse hat eine Fließzeit von etwa 8 Sekunden.

Die Fließzeit der Masse läßt sich durch Variation der Art und Menge der Katalysatoren innerhalb gewisser Grenzen steuern.

### Beispiel 4

Es werden 91 g der Reaktionskomponente A von Beispiel 1 mit 58,1 g der Reaktionskomponente B von Beispiel 1 vermischt. Die erhaltene Masse hat keine Fließzeit; das Produkt ist nach weniger als 10 Sekunden fest.

### Beispiel 5

Es werden 45,5 g der Reaktionskomponente A von Beispiel 1 mit 116,2 g der Reaktionskomponente B von Beispiel 1 vermischt. Die erhaltene Masse hat keine Fließzeit. Das Produkt ist nach weniger als 4 Sekunden fest, d.h. ein Eindringen mit einem spitzen Gegenstand in seine Oberfläche ist nicht möglich.

### Anwendungsbeispiel

Die Reaktionskomponenten A und B gemäß Beispiel 1 werden in eine übliche Zweikammerpatrone mit einer Länge von etwa 500 mm und einem Durchmesser von etwa 27 mm eingebracht. Die gefüllte Patrone wird in einem Kohlebergwerk in ein Bohrloch mit einem Durchmesser voon 42 mm eingebracht. Sie wird zur Befestigung eines Ankers mit einem Durchmesser von 35 mm verwendet.

Nach Zerstörung der Patrone nimmt der verklebte Anker nach 1 Stunde eine Zugbelastung von 4,8 Tonnen auf. Nach 24 Stunden erreicht die mögliche Zugbelastung bereits 25,6 Tonnen. Nach 12 Tagen verformt sich der Metallanker bei einer Zugbelastung von 27 Tonnen, d.h. der Stahl dehnt sich.

## Patentansprüche

1. Hochfeste Organomineralprodukte, erhältlich durch Umsetzung von Polyisocyanaten, wäßrigen Alkalisilikatlösungen und Zement in Gegenwart eines im Polyisocyanat stabil dispergierbaren Katalysators.

2. Organomineralprodukte nach Anspruch 1, dadurch gekennzeichnet, daß zu ihrer Herstellung als im Polyisocyanat stabil dispergierbarer Katalysator ein heterocyclisch substituierter Ether der Formel
B-A-O-A-B
verwendet wird, in der A einen Alkylenrest mit 1 bis 4 Kohlenstoffatomen und B einen 5- bis 8-gliedrigen, N und/oder O und/oder S enthaltenden, mono- oder bicyclischen heterocyclischen Ring bedeutet.

3. Organomineralprodukte nach Anspruch 2, dadurch gekennzeichnet, daß zu ihrer Herstellung als im Polyisocyanat stabil dispergierbarer Katalysator Dimorpholinodiethylether verwendet wird.

4. Organomineralprodukte nach Anspruch 1 bis 3, dadurch gekennzeichnet, daß zu ihrer Herstellung zusätzlich ein in der Polyurethanchemie üblicher und/oder ein die Trimerisierung des Polyisocyanates aktivierender Katalysator verwendet wird.

5. Organomineralprodukte nach einem der Ansprüche 1 bis 4, dadurch gekennzeichnet, daß zu ihrer Herstellung ein Zement eingesetzt wird, der mit dem Polyisocyanat nicht reagiert.

6. Organomineralprodukte nach einem der Ansprüche 1 bis 5, dadurch gekennzeichnet, daß zu ihrer Herstellung der Zement in der Polyisocyanat-Komponente dispergiert eingesetzt wird.

7. Organomineralprodukte nach einem der Ansprüche 1 bis 6, dadurch gekennzeichnet, daß zur Umsetzung 0,05 bis 3 Gew.-Teile Zement pro Gew.-Teil Polyisocyanat eingesetzt werden.

8. Organomineralprodukte nach einem der Ansprüche 1 bis 7, dadurch gekennzeichnet, daß das eingesetzte Polyisocyanat einen Gehalt an NCO-Gruppen von 3 bis 55 Gew.-%, bezogen auf die Masse des Polyisocyanats, aufweist.

9. Organomineralprodukte nach Anspruch 8, dadurch gekennzeichnet, daß zu ihrer Herstellung 4,4'-Diphenylmethandiisocyanat, ein Phosgenierungsprodukt von Anilin-Formaldehydkondensaten (rohes MDI) oder ein Präpolymerisat davon als Polyisocyanat eingesetzt wird.

10. Organomineralprodukte nach Anspruch 9, dadurch gekennzeichnet, daß das Präpolymerisat ein Umsetzungsprodukt von rohem MDI mit glykolgestartetem Polysiloxan mit einer OH-Zahl von 40 bis 200 darstellt.

11. Organomineralprodukte nach einem der Ansprüche 1 bis 10, dadurch gekennzeichnet, daß zu ihrer Herstellung eine wäßrige Alkalisilikatlösung mit einem Feststoffgehalt von 40 bis 60 Gew.-% eingesetzt wird.

12. Organomineralprodukte nach einem der Ansprüche 1 bis 11, dadurcn gekennzeichnet, daß zu ihrer Herstellung eine wäßrige Alkalisilikatlösung mit einem Molverhältnis SiO₂ zu MeO₂ von 2,09 bis 3,44, vorzugsweise von 2,48 bis 3,17 eingesetzt wird, wobei Me ein Alkalimetall bedeutet.

13. Organomineralprodukte nach einem der Ansprüche 1 bis 12, dadurch gekennzeichnet, daß zu ihrer Herstellung das Polyisocyanat und die Alkalisilikatlösung in einem Molverhältnis NCO/SiO₂ von 0,8 bis 1,4, vorzugsweise von 0,85 bis 1,15, eingesetzt werden.

14. Organomineralprodukte nach einem der Ansprüche 1 bis 13, dadurch gekennzeichnet, daß zu ihrer Herstellung eine flüchtige Substanz in einer Menge von höchstens 3,5 Gew.-%, bezogen auf die Gesamtmasse des Reaktionsgemisches, eingesetzt wird.

15. Organomineralprodukt nach einem der Ansprüche 1 bis 14, dadurch gekennzeichnet, daß es nicht expandiert ist.

16. Verfahren zur Herstellung der Organomineralprodukte nach Anspruch 1, dadurch gekennzeichnet, daß man ein Polyisocyanat, einen Zement und eine wäßrige Alkalisilikatlösung in Gegenwart eines im Polyisocyanat stabil dispergierbaren Katalysators zur Umsetzung bringt.

17. Verfahren nach Anspruch 16, dadurch gekennzeichnet, daß man eine Suspension des Zements und des Katalysators in dem Polyisocyanat mit der wäßrigen Alkalisilikatlösung umsetzt.

18. Verfahren nach Anspruch 16 oder 17, dadurch gekennzeichnet, daß man die Umsetzung in Gegenwart eines heterocyclisch substituierten Ethers der Formel
B-A-D-A-B
als Katalysator durchführt, in der A einen Alkylenrest mit 1 bis 4 Kohlenstoffatomen und B einen 5- bis 8-gliedrigen, N und/oder O und/oder S enthaltenden, mono- oder bicyclischen heterocyclischen Ring bedeutet.

19. Verfahren nach einem der Ansprüche 16 bis 18, dadurch gekennzeichnet, daß man die Umsetzung in einer Kohle-, Gebirgs-, Erd- oder Ziegelformation durchführt, in die die Reaktionsteilnehmer eingebracht wurden.

20. Verfahren zum Verfestigen und Abdichten von Kohle und/oder Gebirgs-, Erd- und Ziegelformationen, umfassend die Umsetzung von Polyisocyanaten, wäßrigen Alkalisilikatlösungen und Zement in Gegenwart eines im Polyisocyanat stabil dispergierbaren Katalysators in der zu verfestigenden Kohle oder Gebirgs-, Erd- oder Ziegelformation.

21. Verfahren nach Anspruch 20, dadurch gekennzeichnet, daß das Verfestigen und Abdichten durch Auftrag der Bestandteile auf eine abzudichtende Oberfläche nach einem Zweikomponenten-Spritzverfahren (Anspritzen) erfolgt.

22. Verwendung der Organomineralprodukte nach einem der Ansprüche 1 bis 15 als Bau-, Beschichtungs-, Abdichtungs- oder Isoliermaterial oder als Kitt oder Klebstoff.

23. Zweikammerpatrone, enthaltend in einer Kammer ein Polyisocyanat, in dem ein Zement und ein Katalysator dispergiert sind, und in der anderen Kammer eine wäßrige Alkalisilikatlösung.

## Claims

1. High-strength organomineral products, obtainable by reacting polyisocyanates, aqueous alkali silicate solutions and cement in the presence of a catalyst that is stably dispersible in the polyisocyanate.

2. The organomineral products according to claim 1 characterized in that they are prepared using a heterocyclic substituted ether of the formula
B-A-O-A-B
as a catalyst that is stably dispersible in the polyisocyanate, in which formula A is an alkylene group having 1 to 4 carbon atoms and B is a 5- to 8-membered mono- or bicyclic heterocyclic ring comprising N and/or O and/or S.

3. The organomineral products according to claim 2 characterized in that they are prepared using a dimorpholinodiethyl ether as the catalyst that is stably dispersible in the polyisocyanate.

4. The organomineral products according to claims 1 to 3 characterized in that they are prepared additionally using a catalyst common in polyurethane chemistry and/or a catalyst that activates the trimerisation of the polyisocyanate.

5. The organomineral products according to any one of claims 1 to 4 characterized in that they are prepared using a cement that does not react with the polyisocyanate.

6. The organomineral products according to any one of claims 1 to 5 characterized in that they are prepared with the used cement being dispersed in the polyisocyanate component.

7. The organomineral products according to any one of claims 1 to 6 characterized in that 0.05 to 3 parts by weight cement per part by weight polyisocyanate are used in the reaction.

8. The organomineral products according to any one of claims 1 to 7 characterized in that the used polyisocyanate has a NCO-groups content of 3 to 55% by weight, based on the amount of polyisocyanate.

9. The organomineral products according to claim 8 characterized in that they are prepared using 4,4'-diphenylmethane diisocyanate, a phosgenation product of aniline formaldehyde condensates (crude MDI) or a prepolymer thereof as polyisocyanate.

10. The organomineral products according to claim 9 characterized in that the prepolymer is a reaction product of crude MDI with glycol-started polysiloxane having an OH number of from 40 to 200.

11. The organomineral products according to any one of claims 1 to 10 characterized in that they are prepared using an aqueous alkali silicate solution having a solids content of from 40 to 60% by weight.

12. The organomineral products according to any one of claims 1 to 11 characterized in that they are prepared using an aqueous alkali silicate solution having a molar ratio SiO₂ to MeO₂ of from 2.09 to 3.44, preferably from 2.48 to 3.17, wherein Me is an alkali metal.

13. The organomineral products according to any one of claims 1 to 12 characterized in that they are prepared using the polyisocyanate and the alkali silicate solution in a molar ratio NCO/SiO₂ of from 0.8 to 1.4, preferably from 0.85 to 1.15.

14. The organomineral products according to any one of claims 1 to 13 characterized in that they are prepared using a volatile substance in an amount no more than 3.5% by weight, based on the total amount of the used reaction mixture.

15. The organomineral product according to any one of claims 1 to 14 characterized in that it is not expanded.

16. A method for producing the organomineral products according to claim 1 characterized in that a polyisocyanate, a cement and an aqueous alkali silicate solution are reacted in the presence of a catalyst that is stably dispersible in the polyisocyanate.

17. The method according to claim 16 characterized in that a suspension of the cement and the catalyst in the polyisocyanate is reacted with the aqueous alkali silicate solution.

18. The method according to claim 16 or 17 characterized in that the reaction is carried out in the presence of a heterocyclic substituted ether having the formula
B-A-D-A-B
as catalyst, wherein A is an alkylene group having 1 to 4 carbon atoms and B is a 5- to 8-membered mono- or bicyclic heterocyclic ring containing N and/or O and/or S.

19. The method according to any one of claims 16 to 18 characterized in that the reaction is carried out in a coal, rock, earth or brick formation into which the reactants have been introduced.

20. The method for strengthening and sealing coal and/or rock, earth and brick formations comprising reacting polyisocyanates, aqueous alkali silicate solutions and cement in the presence of a catalyst that is stably dispersible in the polyisocyanate in the coal or rock, earth or brick formation to be strengthened.

21. The method according to claim 20 characterized in that the strengthening and sealing takes place by applying the components to a surface to be sealed according to a two-component spraying method.

22. Use of the organomineral products according to any one of claims 1 to 15 as construction, coating, sealing or insulation material or as cement or adhesive.

23. Two-chamber cartridge comprising a polyisocyanate in one chamber wherein a cement and a catalyst are dispersed and in the other chamber an aqueous alkali silicate solution.

## Revendications

1. Produits organominéraux à haute résistance, pouvant être obtenus par réaction de polyisocyanate, de solutions aqueuses de silicate alcalin et de ciment en présence d'un catalyseur pouvant être dispersé de façon stable dans le polyisocyanate.

2. Produits organominéraux selon la revendication 1, caractérisés en ce que pour leur préparation, on utilise en tant que catalyseur pouvant être dispersé de façon stable dans le polyisocyanate, un éther substitué hétérocycliquement de la formule
B-A-O-A-B
dans laquelle A est un radical alkylène avec 1 jusqu'à 4 atomes de carbone et B signifie un cycle hétérocyclique mono- ou bicyclique contenant 5 à 8 chaînons, N et/ou O et/ou S.

3. Produits organominéraux selon la revendication 2, caractérisés en ce que pour leur préparation, on utilise du dimorpholinodiéthyléther en tant que catalyseur pouvant être dispersé de façon stable dans le polyisocyanate.

4. Produits organominéraux selon les revendications 1 à 3, caractérisés en ce que pour leur préparation, on utilise de façon supplémentaire un catalyseur usuel dans la chimie du polyuréthanne et/ou un catalyseur activant la trimérisation du polyisocyanate.

5. Produits organominéraux selon l'une des revendications 1 à 4, caractérisés en ce que pour leur préparation, on utilise un ciment qui ne réagit pas avec le polyisocyanate.

6. Produits organominéraux selon l'une des revendications 1 à 5, caractérisés en ce que pour leur préparation, on utilise le ciment mis en dispersion dans le composant polyisocyanate.

7. Produits organominéraux selon l'une des revendications 1 à 6, caractérisés en ce que pour la réaction, on utilise 0,05 jusqu'à 3 parties en poids de ciment par partie en poids de polyisocyanate.

8. Produits organominéraux selon l'une des revendications 1 à 7, caractérisés en ce que le polyisocyanate mis en oeuvre présente une teneur en groupes NCO de 3 à 55 % en poids rapportés à la masse du polyisocyanate.

9. Produits organominéraux selon la revendication 8, caractérisés en ce que pour leur préparation, on utilise un 4,4'-diphénylméthandiisocyanate, un produit de phosgénation de condensats aniline-formaldéhyde (MDI -diisocyanatodiphénylméthane- brut) ou son prépolymérisat en tant que polyisocyanate.

10. Produits organominéraux selon la revendication 9, caractérisés en ce que le prépolymérisat représente un produit réactionnel de MDI -diisocyanatodiphénylméthanebrut avec un polysiloxane amorcé au glycol et un indice OH de 40 à 200.

11. Produits organominéraux selon l'une des revendications 1 à 10, caractérisés en ce que pour leur préparation, on utilise une solution de silicate alcalin aqueuse avec une teneur en matière solide de 40 à 60 % en poids.

12. Produits organominéraux selon l'une des revendications 1 à 11, caractérisés en ce que pour leur préparation, on utilise une solution de silicate alcalin aqueuse avec un rapport molaire entre SiO₂ et MeO₂ de 2,09 jusqu'à 3,44, de préférence de 2,48 jusqu'à 3,17, Me signifiant un métal alcalin.

13. Produits organominéraux selon l'une des revendications 1 à 12, caractérisés en ce que pour leur préparation, on utilise le polyisocyanate et la solution de silicate alcalin dans un rapport molaire NCO/SiO₂ de 0,8 à 1,4, de préférence de 0,85 à 1,15.

14. Produits organominéraux selon l'une des revendications 1 à 13, caractérisés en ce que pour leur préparation, on utilise une substance volatile dans une quantité de 3,5 % en poids maximum, rapportés à la masse totale du mélange réactionnel.

15. Produit organominéral selon l'une des revendications 1 à 14, caractérisé en ce qu'il n'est pas expansé.

16. Procédé pour la préparation de produits organominéraux selon la revendications 1, caractérisé en ce que l'on met en réaction un polyisocyanate, un ciment et une solution de silicate alcalin aqueuse en présence d'un catalyseur pouvant être dispersé de façon stable dans le polyisocyanate.

17. Procédé selon la revendication 16, caractérisé en ce que l'on met en réaction une suspension du ciment et du catalyseur dans le polyisocyanate avec la solution de silicate alcalin aqueuse.

18. Procédé selon la revendication 16 ou 16, caractérisé en ce que l'on conduit la réaction en présence d'un éther substitué hétérocycliquement de la formule
B-A-D-A-B
en tant que catalyseur, formule dans laquelle A signifie un radical alkylène avec 1 jusqu'à 4 atomes de carbone et B signifie un cycle hétérocyclique mono- ou bicyclique contenant 5 à 8 chaînons, N et/ou O et/ou S.

19. Procédé selon l'une des revendications 16 à 18, caractérisé en ce que l'on conduit la réaction dans une formation de houille, de roche, de terre ou d'argile dans laquelle on incorpore les participants réactionnels.

20. Procédé pour la consolidation et étanchéité de formation de houille et/ou de roche, de terre et d'argile, englobant la réaction de polyisocyanate, de solution de silicate alcalin aqueuse et de ciment en présence d'un catalyseur pouvant être dispersé de façon stable dans le polyisocyanate dans la formation de houille ou de roche, de terre ou d'argile à consolider.

21. Procédé selon la revendication 20, caractérisé en ce que la consolidation et l'étanchéité s'effectuent par application des composants sur une surface à rendre étanche selon un procédé de pulvérisation à deux composants (pulvérisation au pistolet).

22. Utilisation des produits organominéraux selon l'une des revendications 1 à 15, en tant que matériaux de construction, de revêtement, d'étanchéité ou d'isolation ou en tant que mastic ou ciment à boucher les pores ou substances adhésives.

23. Cartouche à deux chambres, contenant dans une chambre un polyisocyanate dans lequel sont dispersés un ciment et un catalyseur et dans l'autre chambre, une solution de silicate alcalin aqueuse.
